# EUROPÄISCHE PATENTSCHRIFT

(11) **EP 0 482 006 B1**
(45) Veröffentlichungstag und Bekanntmachung des Hinweises auf die Patenterteilung: **02.02.1994**
(21) Anmeldenummer: 90908192.9
(22) Anmeldetag: 01.06.1990
(51) Int. Cl.: B60S 1/60, B60Q 9/00, G01N 21/88

(54) **SCHMUTZSENSOR FÜR KRAFTFAHRZEUG-SCHEIBEN**
DIRT SENSOR FOR PANES IN MOTOR VEHICLES
DETECTEUR D'IMPURETES POUR VITRES D'AUTOMOBILES

(30) Priorität: 14.07.1989 DE 3923281
(43) Veröffentlichungstag der Anmeldung: 29.04.1992
(73) Patentinhaber: ROBERT BOSCH GMBH, 70442 Stuttgart (DE)
(72) Erfinder: JÜLIGER, Peter, D-7500 Karlsruhe (DE)
(86) Internationale Anmeldenummer: DE9000417
(87) Internationale Veröffentlichungsnummer: WO9101234

(56) Entgegenhaltungen:
- DE-A- 3 203 091
- Elektronik, Band 21, Nr. 1, Januar 1972, A. Grünbacken: "Scheibenwischersteuerung mit Einschaltautomatik", S. 17-19

## Beschreibung

### Stand der Technik

Die Erfindung geht aus von einer Schaltungsanordnung für einen optoelektronischen Schmutzsensor zur Erfassung von Fremdkörpern auf einer transparenten Scheibe nach der Gattung des Hauptanspruchs. Staub, Schmutz, Regen oder Schnee beeinträchtigen bekanntermaßen die Lichttransmission an Windschutzscheiben bzw. Scheinwerfer-Streuscheiben eines Kraftfahrzeuges. Zur Beseitigung der Verschmutzung ist eine automatische Scheibenreinigung durchzuführen. Die Scheibenreinigung wird durch einen optoelektronischen Schmutzsensor ausgelöst,der gegen Fremdlicht, das vom Umgebungslicht oder Gegenlicht fremder bzw. eigener Scheinwerfer herrührt, unempfindlich ist.

Aus der DE-A-36 19 208 ist eine Vorrichtung bekannt, die eine nasse oder trockene Verschmutzung auf der Oberfläche einer Scheinwerfer-Streuscheibe erkennt und bei Verschmutzung eine Reinigungsanlage in Betrieb setzt. Bei dieser Vorrichtung sind auf der Innenseite der Scheibe ein optischer Sender und Empfänger angeordnet. Die vom optischen Sender emittierte Strahlung wird von Schmutzteilchen auf der Streuscheibe reflektiert. Die reflektierte Strahlung wird weitgehend vom Empfänger aufgenommen und einer Auswerteschaltung zugeführt.

Es hat sich gezeigt, daß eine derartige Anordnung von Sender und Empfänger nicht in allen Fällen das vom Fremdlicht erzeugte Gleichspannungssignal vom gepulsten Nutzsignal unterscheiden kann. Insbesondere wird der Fototransistor des Empfängers bei hohem Fremdlichtanteil stark in die Sättigung getrieben, so daß an seinem Kollektor kein brauchbares Nutzsignal abgreifbar ist. Auch bewirken hohe Temperaturbelastungen, die durch die Scheinwerferlampe erzeugt werden, daß der Arbeitspunkt des Fototransistors wegdriftet und dadurch ebenfalls das auskoppelbare Nutzsignal zu klein wird. Ein weiterer Punkt ist, daß Schwankungen der Betriebsspannung, insbesondere nachts, wenn viele Verbraucher eingeschaltet sind, zu einer unerwünscht niedrigen Kollektor-Ermitterspannung führen.

Aus der DE 32 03 091 A1 ist eine Einrichtung zum Erkennen von Fremdstoffen auf einer Scheibe bekannt, bei der mit Hilfe von zwei Lichtquellen, die jeweils einem Lichtempfänger zugeordnet sind, das an einer Scheibe reflektierte Licht empfangen wird. Die Sender und Empfänger sind über glasklare Prismen derart schräg zur Oberfläche der Scheibe räumlich angeordnet, daß bei trockener Scheibe eine Totalreflektion zum Empfänger auftritt. Bei einer nassen oder verschmutzten Scheibe wird kein Licht oder ein difus reflektiertes Licht empfangen. Aufgrund des empfangenen Signals kann unterschieden werden, ob die Scheibe naß, verschmutzt oder verschneit ist. Das Sendesignal wird mit einem getakteten Signal hoher Frequenz ausgestrahlt, um sich vom Gleichspannungsanteil des einfallenden Störlichtes zu unterscheiden. Allerdings wird bei starker Störlichteinstrahlung der Fototransistor in die Sättigung getrieben, so daß dann kein brauchbares Wechselspannungssignal zur Auswertung bereit steht.

Es hat sich in der Praxis gezeigt, daß das Sensorsignal insbesondere durch die Reflexion des eigenen Scheinwerferlichtes zeitweilig so gestort wurde, daß es trotz zunehmender Verschmutzung der Scheibe nicht mehr die Auslöseschwelle für das Einschalten der Reinigungsanlage erreichte. Die Schaltungsanordnung des Schmutzsensors war dann funktionsuntüchtig.

Das gleiche Problem ergab sich auch bei starkem Lichteinfall entgegenkommender Fahrzeuge, was insbesondere bei Nachtfahrten sehr störend ist.

### Vorteile der Erfindung

Die erfindungsgemäße Schaltungsanordnung mit den kennzeichnenden Merkmalen des Hauptanspruchs hat demgegenüber den Vorteil, daß die Betriebszuverlässigkeit der Schaltung besonders bei hoher Fremdlichteinstreuung auf den Sensor gewährleistet ist.

Ein weiterer Vorteil ist in der Regelung des Arbeitspunktes zu sehen, da unabhängig von der Amplitude des einfallenden Fremdlichtes der durch das Fremdlicht erzeugte Gleichspannungsanteil der Ausgangsspannung ausgeregelt wird. Bei hohem Fremdlichtpegel würde beispielsweise ein als Empfänger geschalteter Fototransistor ohne Regelung in die Sättigung durchschalten, wodurch das auswertbare Nutzsignal stark verringert würde. Durch die Regelung ist das Nutzsignal unabhängig vom Fremdlicht auswertbar.

Auch ist vorteilhaft, daß durch die Regelung des Arbeitspunktes der Empfänger unempfindlich gegen hohe Umgebungstemperaturen wird. Hohe Umgebungstemperaturen können die Stromverstärkung beispielsweise eines Fototransistors verringern, so daß das auswertbare Nutzsignal ebenfalls verringert wird.

Durch die in den Unteransprüchen aufgeführten Maßnahmen sind vorteilhafte Weiterbildungen und Verbesserungen der im Hauptanspruch angegebenen Schaltungsanordnung möglich.

Ein besonderer Vorteil ist auch in der Spannungserhöhungsschaltung zu sehen, die den Arbeitsbereich des Empfängers über die durch die Bordspannung vorhandene Begrenzung vergrößert. Dadurch ergibt sich besonders bei einem starken Fremdlichtpegel ein noch gut auswertbares Nutzsignal des Schmutzsensors.

Zur Erfassung des Fremdlichteinflusses ist es vorteilhaft, den zeitlichen Mittelwert der Ausgangsspannung des Fototransistors zu erfassen. Lichtblitze oder Spiegelungen, die kurzzeitige Spannungsimpulse liefern, beeinflussen nicht das Meßergebnis, da sie ausgefiltert werden.

Um den Einfluß des Fremdlichtes zu unterdrücken, wird vorteilhaft die Ausgangsspannung des Empfängers mit zunehmendem Fremdlichtanteil erhöht bzw. der Kollektorwiderstand verringert. Dadurch ist das Nutzsignal über den ganzen Arbeitsbereich des Empfängers auswertbar.

Die Verwendung eines Fototransistors als Empfänger ergibt vorteilhaft eine einfache konstruktive Maßnahme für den Schmutzsensor.

Auch ist vorteilhaft, als Arbeitswiderstand einen Feldefekttransistor zu verwenden, da seine Widerstandsregelung besonders einfach ausgebildet werden kann.

Da bei Scheinwerfern die Lichtausbeute mit zunehmender Verschmutzung der Streuscheiben stark nachläßt, ist es vorteilhaft, die Reflexiionslichtschranke im Bereich der Streuscheibe anzuordnen. Eine verschmutzte Scheibe kann von der Reflexionslichtschranke leicht am Pegel der reflektierten Strahlung als Wechselspannungssignal erkannt werden und dann zum Schalten des Scheibenwischers und/oder einer Wascheinrichtung verwendet werden.
Weitere Vorteile der Erfindung sind der Beschreibung entnehmbar.

### Zeichnung

Ausführungsbeispiele der Erfindung sind in den Zeichnungen dargestellt und in der nachfolgenden Beschreibung näher erläutert. Es zeigen Figur 1 einen Teil eines Scheinwerferglases mit einer Reflexionslichtschranke, Figur 2 ein erstes Ausführungsbeispiel, Figur 3 ein zweites Ausführungsbeispiel und Figur 4 ein drittes Ausführungsbeispiel.

### Beschreibung der Ausführungsbeispiele

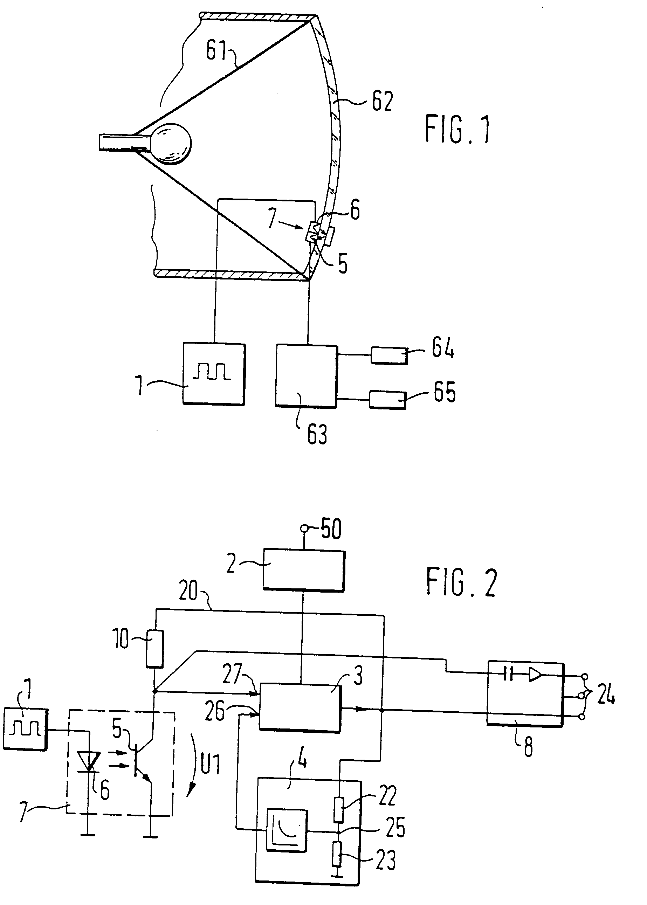

In Figur 1 ist ein Ausschnitt eines Scheinwerfers zu sehen, der einen Reflektor 61 und als transparente Scheibe 62 eine Streuscheibe aufweist. An der Innenseite der Streuscheibe ist an einer nicht störenden Stelle eine Reflexionslichtschranke 7 mit einer Sendediode 6 und einem Fototransistor 5 angeordnet. Diese Reflexionslichtschranke 7 ist beispielsweise als Infrarot-Reflexionslichtschranke handelsüblich. Die Sendediode 6 ist mit einem Pulsgenerator 1 verbunden, der eine vorgegebene Pulsfolge als Strom- oder Spannungsimpulse abgibt. Der Fototransistor 5 ist mit einer Signalauswertung 63 verbunden, die den Nutz- und Fremdlichtanteil analysiert. Die analysierten Signale werden auf einen oder mehrere Schaltausgänge geleitet, die beispielsweise mit einer Wascheinrichtung 64 oder einer Warneinrichtung 65 verbunden sind.

In Figur 2 ist der Stromlaufplan eines ersten Ausführungsbeispiels in Form eines Blockschaltbildes dargestellt. Der Kollektor des Fototransistors 5 ist über einen Widerstand 10 mit einer Spannungsversorgungsleitung 20 verbunden. Parallel zu diesem Widerstand 10 ist ein Arbeitspunktregler 3 geschaltet. Der Arbeitspunktregler ist als PI-Regler aufgebaut, dem ein Tiefpaß vorgeschaltet ist. Der Ausgang des Arbeitspunktreglers 3 ist einerseits mit einem Arbeitspunktregler 4 und andererseits mit einem Eingang eines Dekoders 8 verbunden. Ein weiterer Eingang des Dekoders 8 ist mit dem Kollektor 21 des Fototransistors 5 verbunden. Der Dekoder 8 weist einen oder mehrere Ausgänge 24 auf, an die die nicht dargestellten Einrichtungen wie Wascheinrichtung oder Warneinrichtung anschließbar sind. In den Dekoder 8 sind Hoch- und Tiefpaßfilter, sowie Speicher- und Treiberstufen zur getrennten Auswertung des Nutz- und Fremdlichtpegels vorgesehen.

Der Fremdlichtregler 4 weist einen Regler auf, der gemäß einer vorgegebenen Kennlinie, beispielsweise einer Hyperbelfunktion, ein Ausgangssignal abgibt, das in bezug auf das dem Fremdlicht entsprechende Eingangssignal gebildet wird. Die Kennlinie wird zweckmäßigerweise experimentell ermittelt. Selbstverständlich ist auch jede andere Kennlinie vorgebbar. Zur Anpassung des Reglers ist dem Eingang ein Spannungsteiler 22/23 vorgeschaltet, mit dem am Mittenabgriff 25 das Gleichspannungssignal des Arbeitspunktreglers 3 einstellbar ist. Der Spannungsteiler 22/23 wird so abgeglichen, daß bei maximal möglichem Fremdlicht der Ausgang des Fremdlichtreglers einen noch geeigneten Wert am Sollwerteingang 26 des Arbeitspunktreglers 3 erreicht.

Die Spannungsversorgung für die einzelnen Baugruppen ist nicht dargestellt, da sie von der Betriebsspannung, die im Kraftfahrzeug üblicherweise 12 Volt beträgt, betrieben werden. Der Arbeitspunktregler 3 ist mit einer Spannungsverdoppelerschaltung 2 verbunden, die die Betriebsspannung zur Versorgung des Empfängers 5 auf einen etwa doppelten Wert anhebt.

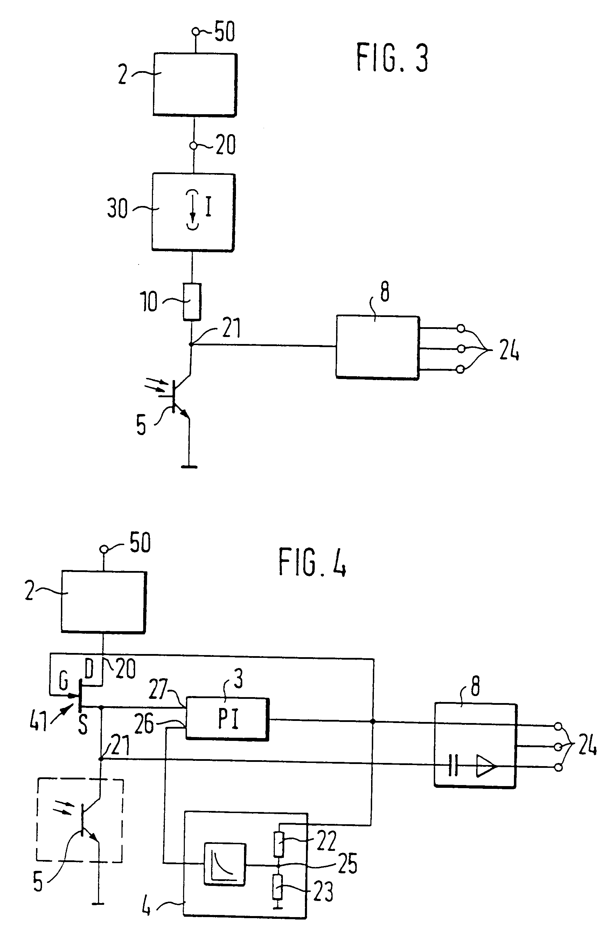

In Figur 3 ist das Blockschaltbild eines weiteren Ausführungsbeispiels dargestellt, bei dem in Serie zum Fototransistor 5 eine Konstantstromquelle 30 geschaltet ist. Die Konstantstromquelle ist über die Spannungsverdopplerschaltung 2 mit dem Bordnetz 50 verbunden.

Die Konstantstromquelle 30 zeigt ein Tiefpaßverhalten, so daß der Strom langsam dem Fremdlichtsignal nachgeführt wird.

Spannungsverdopplerschaltungen 2 sind per se bekannt und müssen daher nicht näher beschrieben werden.

Der Kollektor 21 des Fototransistors 5 ist mit dem Dekoder 8 verbunden. Der Dekoder 8 weist die in Figur 2 beschriebenen Eigenschaften auf.

Ein drittes Ausführungsbeispiel ist in Figur 4 dargestellt. Es unterscheidet sich von dem ersten Ausführungsbeispiel dadurch, daß der Widerstand 10 durch einen Feldefektwiderstand 41 ersetzt ist, dessen Drainanschluß D mit der Spannungsverdopplerschaltung 2 und dessen Sourceanschluß S mit dem Kollektor 21 des Fototransistors 5 verbunden ist. Der Ausgang des Arbeitspunktreglers 3 ist mit dem Steuergate G des Feldefekttransistor 41 verbunden.

Die weitere Verschaltung ist mit dem in Figur 2 dargestellten Ausführungsbeispiel identisch.

Im folgenden wird die Funktionsweise dieser Schaltungsanordnung beschrieben.

Der Fototransistor 5 empfängt die von der Sendediode 6 ausgesandte gepulste Strahlung sowie das einfallende Fremdlicht. Dadurch ergibt sich eine Kollektor-Emitterspannung U1, die sich aus einem Wechselspannungsanteil und einem Gleichspannungsanteil zusammensetzt. Die Höhe des Gleichspannungsanteils ist ein Maß für den einfallenden Fremdlichtpegel, während die Wechselspannung den Verschmutzungsgrad der Scheibe angibt.

Die Kollektor-Emitterspannung U1 wird im wesentlichen bestimmt durch den Widerstand 10 und die Versorgungsspannung 20. Da der Gleichspannungsanteil der Kollektor-Emitterspannung U1 sich aber bei starkem Fremdlichteinfall verringern würde, wird er durch den Arbeitspunktregler 3 in etwa auf einen festen Wert gehalten, der in diesem Ausführungsbeispiel bei 5 Volt liegt. Der Arbeitspunktregler 3 bildet mit Hilfe eines Tiefpasses den Mittelwert des Kollektorpotentials und vergleicht ihn mit dem vom Fremdlichtregler 4 vorgegebenen Sollwert. Der Ausgang des Arbeitspunktreglers 3 versorgt dann den Widerstand 10 und den Fototransistor 5.

Um den Aussteuerbereich dieser Schaltung zu verbessern, muß die Versorgungsspannung 20 möglichst groß gewählt werden. Da sie aber über die Betriebsspannung, die üblicherweise bei 12 Volt liegt, nicht hinaus angehoben werden kann, ist dem Arbeitspunktregler 3 eine Spannungserhöhungsschaltung 2 vorgeschaltet, die die Betriebsspannung 50 in diesem Ausführungsbeispiel auf 24 Volt verdoppelt. Dadurch kann auch die Versorgungsspannung 20 auf etwa 24 Volt angehoben werden. Diese Maßnahme bewirkt, daß auch bei starkem Fremdlichteinfall ein noch ausreichender Wechslspannungsanteil der Kollektor-Emitterspannung U1 für das Nutzsignal zur Verfügung steht. Diese Kollektor-Emitterspannung U1 wird durch den Arbeitspunktregler 3 aufgrund seiner PI-Kennlinie innerhalb einer gewissen Zeit ausgeregelt.

Die Verringerung des Verschmutzungsgrades oder der Fremdlichteinflüsse würde ohne Arbeitspunktregler 3 bewirken, daß der Gleichspannungsanteil der Kollektor-Emitterspannung U1 ansteigt und damit der Meßwert verfälscht wird. Der Arbeitspunktregler 3 verhindert den Anstieg. In diesem Fall wird die Sollwertvorgabe am Eingang 26 des Arbeitspunktreglers 3 erhöht, so daß bei entsprechender Kennlinie des Fremdlichtreglers 4 der Gleichspannungsanteil des Fremdlichts und des Nutzsignals vollständig ausgeregelt wird, so daß ein störungsfreies Wechselspannungssignal als Nutzsignal zur Verfügung steht.

Der Decoder 8 filtert aus der Kollektor-Emitter-Spannung U1 mittels eines Hochpasses oder Bandpasses das Schmutzsensorsignal aus und leitet es auf eine Treiberstufe, mit der am Ausgang 24 ein entsprechender Schalter oder Relais schaltbar sind. Der Decoder 8 enthält weiterhin entsprechende Signalspeicher oder Pegelvergleicher mit denen das ausgefilterte Signal für die erforderliche Schalter speicherbar ist.

Das Wechselspannungssignal kann sowohl von einer verschmutzten Scheibe als auch von einer mit Regentropfen benetzten Scheibe abgeleitet werden. Es hat sich gezeigt, daß bei einer verschmutzten Scheibe das Wechselspannungsssignal besonders groß ist, während es bei einer regennassen Scheibe besonders schwach ist. Die Erklärung liegt darin, daß bei Regen das Sendersignal besonders stark ausgekoppelt wird und daher nur wenig reflektierte Strahlung in den Empfänger 5 fällt. Durch einen Pegelvergleicher wird dieses Signal abgetrennt, so daß bei einem schwachen Signal der Scheibenwischer und bei einem starken Signal die Sprüheinrichtung eingeschaltet werden kann.

Der Gleichspannungsanteil des Eingangssignals wird dagegen über ein Tiefpaß ausgekoppelt. Dieses Signal entspricht dem Fremdlichtanteil, das entweder aus dem Gegenlicht oder auch von den eigenen Scheinwerfern herrühren kann.

Da der Lichtanteil des eigenen Scheinwerfers stets konstant ist, wird sich ein entsprechender Gleichspannungspegel einstellen, der auch zur Überwachung der Scheinwerferlampe verwendbar ist. Fehlt dieser Gleichspannungsanteil, dann ist der Scheinwerfer entweder ausgeschaltet oder die Lampe defekt. Auf diese Weise erhält man eine einfache Kontrolle der Funktionsbereitschaft der Lampe. Über eine entsprechende Anzeige auf dem Armaturenbrett kann der Fahrer über die Funktionsbereitschaft der Lampen unterrichtet werden.

Bei einfallendem Fremdlicht, das durch ein entgegenkommendes Fahrzeug entsteht, ändert sich der Gleichspannungspegel relativ langsam. Diese langsame Änderung wird dazu ausgenutzt, diesen Fremdlichtanteil zum Ansteuern einer weiteren Funktion zu verwenden. Dieses Signal wird ebenfalls auf eine Endstufe geleitet und kann bei Erreichen eines bestimmten Pegels beispielsweise die eigenen Scheinwerfer von Fernlicht auf Abblendlicht umschalten.

Zur Erkenneung wird dieses Signal über ein Differenzierglied geleitet und die Amplitude mittels eines Komparators ausgewertet.

Im zweiten Ausführungsbeispiel gemäß der Figur 3 wird zur Versorgung des Fototransistors 5 eine Konstantstromquelle 30 verwendet, die von der Spannungsverdopplerschaltung 2 gespeist wird. Die Konstantstromquelle 30 enthält einen Tief- oder Bandpaß, so daß der Strom im zeitlichen Mittel zwar konstant ist, aber die Ausgangsspannung U1 dem Nutzsignalverlauf folgen kann. Dieses Signal wird ebenfalls wie im ersten Ausführungsbeispiel beispielsweise am Kollektor des Fototransistors 5 ausgekoppelt und auf den Decoder 8 geleitet und dort in derselben Weise ausgewertet, wie bereits beschrieben wurde.

Um die Vorteile der Fremdlichtregelung zu erhalten, kann die Konstandstromquelle 30 mit einem Arbeitspunktregler bzw. und mit einem Fremdlichtregler kombiniert werden.

Im dritten Ausführungsbeispiel wird der Widerstand 10 durch einen Feldeffekttransistor 41 ersetzt. Der Feldeffekttransistor wirkt als veränderlicher Widerstand, der vom Arbeitspunktregler 3 über sein Gate angesteuert und in Abhängigkeit vom Fremdlichtanteil veränderbar ist. Um einen ausreichenden Spannungshub zur Verfügung zu haben, wird er von der Spannungsverdopplerschaltung 2 gespeist.

In weiterer Ausgestaltung der Erfindung ist es vorgesehen, auch die Umgebungshelligkeit zu messen, um im Bedarfsfall bei schwachen Lichtverhältnissen die Scheinwerfer automatisch einzuschalten. Erreicht die Umgebungshelligkeit einen bestimmten Mindestwert, dann schalten sich mit einer gewissen Verzögerung die Scheinwerfer automatisch ein. Zum Ausschalten der Scheinwerfer kann eine weitere Schaltschwelle verwendet werden. Vorgesehen ist auch, die automatische Schaltung des Scheinwerfers mittels eines Hauptschalters, beispielsweise des Zündschalters zu kontrollieren.

## Patentansprüche

1. Schaltungsanordnung für einen optoelektronischen Schmutzsensor zur Erfassung von Fremdkörpern auf einer transparenten Scheibe (62), die beispielsweise an einem Kraftfahrzeug angeordnet ist, mit einer dynamisch angesteuerten Reflexionslichtschranke (7), deren Empfänger (5) über einen Arbeitswiderstand von einer Versorgungsspannung (50) gespeist wird, dadurch gekennzeichnet, daß ein Arbeitspunktregler (3) vorgesehen ist, der den Arbeitspunkt des Empfängers (5) in Abhängigkeit vom einfallenden Fremdlicht regelt und daß eine Spannungserhöhungsschaltung (2) vorgesehen ist, die die nutzbare Versorgungsspannung für den Empfänger (5) erhöht.

2. Schaltungsanordnung nach Anspruch 1, dadurch gekennzeichnet, daß bei einfallendem Fremdlicht der Gleichspannungsanteil am Empfängerausgang durch den zeitlichen Mittelwert bestimmbar ist.

3. Schaltungsanordnung nach einem der vorhergehenden Ansprüche, dadurch gekennzeichnet, daß bei zunehmendem Fremdlicht die Ausgangsspannung U1 am Empfänger (5) erhöhbar ist.

4. Schaltungsanordnung nach einem der vorhergehenden Ansprüche, dadurch gekennzeichnet, daß der Empfänger (5) ein Fototransistor ist.

5. Schaltungsanordnung nach einem der vorhergehenden Ansprüche, dadurch gekennzeichnet, daß der Widerstand 10 ein Feldefekttransistor (41) ist.

6. Schaltungsanordnung nach einem der vorhergehenden Ansprüche, dadurch gekennzeichnet, daß der dynamische Anteil der Ausgangsspannung des Empfängers (5) zur Steuerung eines Scheibenwischers und/oder einer Wascheinrichtung verwendbar ist.

7. Schaltungsanordnung nach einem der vorhergehenden Ansprüche, dadurch gekennzeichnet, daß die Versorgungsspannung für den Empfänger (5) etwa doppelt so groß ist wie die Betriebsspannung.

8. Schaltungsanordnung nach einem der vorhergehenden Ansprüche, dadurch gekennzeichnet, daß die Reflexionslichtschranke (7) im Bereich der Streuscheibe (62) eines Kraftfahrzeug-Scheinwerfers angeordnet ist.

## Claims

1. Circuit arrangement for an optoelectronic contamination sensor for detecting extraneous bodies on a transparent plate (62) which is arranged for example on a motor vehicle, having a dynamically actuated reflection light barrier (7) whose receiver (5) is fed via a working resistor from a supply voltage (50), characterized in that a working point controller (3) is provided which controls the working point of the receiver (5) as a function of the incident extraneous light, and in that a voltage-increasing circuit (2) is provided which increases the usable supply voltage for the receiver (5).

2. Circuit arrangement according to Claim 1, characterized in that when there is incident extraneous light the direct voltage portion can be determined at the receiver output by the mean time value.

3. Circuit arrangement according to one of the preceding claims, characterized in that when there is increasing extraneous light the output voltage U1 can be increased at the receiver (5).

4. Circuit arrangement according to one of the preceding claims, characterized in that the receiver (5) is a phototransistor.

5. Circuit arrangement according to one of the preceding claims, characterized in that the resistor 10 is a field-effect transistor (41).

6. Circuit arrangement according to one of the preceding claims, characterized in that the dynamic portion of the output voltage of the receiver (5) can be used to control a window or lens wiper and/or a washing device.

7. Circuit arrangement according to one of the preceding claims, characterized in that the supply voltage for the receiver (5) is approximately twice as large as the operating voltage.

8. Circuit arrangement according to one of the preceding claims, characterized in that the reflection light barrier (7) is arranged in the region of the lens (62) of a motor vehicle headlight.

## Revendications

1. Circuit pour un détecteur optoélectronique d'impuretés pour détecter des corps étrangers sur une vitre transparente (62), qui est disposée par exemple sur une automobile, avec un barrage photoélectrique de réflexion (7) commandé dynamiquement, dont le récepteur (5) est alimenté via une résistance de travail par une tension d'alimentation (50), circuit caractérisé en ce qu'on prévoit un régulateur de point de fonctionnement dynamique (3) qui règle le point de fonctionnement dynamique du récepteur (5) en fonction de la lumière étrangère incidente et en ce que l'on prévoit un circuit d'élévation de la tension (2), qui augmente la tension d'alimentation utilisable par le récepteur (5).

2. Circuit selon la revendication 1, caractérisé en ce que dans le cas d'une lumière étrangère incidente, on détermine la fraction de tension continue à la sortie du récepteur grâce à la valeur moyenne dans le temps.

3. Circuit selon l'une des revendications précédentes, caractérisé en ce que dans le cas de lumière étrangère incidente, la tension de sortie U₁ est augmentée sur le récepteur (5).

4. Circuit selon l'une des revendications précédentes, caractérisé en ce que le récepteur (5) est un photo-transistor.

5. Circuit selon l'une des revendications précédentes, caractérisé en ce que la résistance (10) est une résistance à effet de champ (41).

6. Circuit selon l'une des revendications précédentes, caractérisé en ce que la fraction dynamique de la tension de sortie du récepteur (5) est utilisée pour commander un essuie-glace et/ou un dispositif de lavage.

7. Circuit selon l'une des revendications précédentes, caractérisé en ce que la tension d'alimentation du récepteur (5) est environ deux fois plus grande que la tension de fonctionnement.

8. Circuit selon l'une des revendications précédentes, caractérisé en ce que le barrage photoélectrique de réflexion (7) est disposé dans la zone de la glace diffusante (62) d'un phare d'automobile.
